# EUROPÄISCHE PATENTSCHRIFT

(11) **EP 1 914 146 B1**
(45) Veröffentlichungstag und Bekanntmachung des Hinweises auf die Patenterteilung: **26.05.2010**
(21) Anmeldenummer: 07115324.1
(22) Anmeldetag: 30.08.2007
(51) Int. Cl.: B61L 15/00

(54) **Verfahren zur drahtlosen Übermittlung von Informationen zwischen Eisenbahnwagen**
Method for wireless transmission of information between rail vehicles
Procédé de transmissions sans fil d'informations entre des voitures de chemins de fer

(30) Priorität: 11.10.2006 DE 102006048232
(43) Veröffentlichungstag der Anmeldung: 23.04.2008
(73) Patentinhaber: SIEMENS AKTIENGESELLSCHAFT, 80333 München (DE)
(72) Erfinder: Bellen, Tim, 3454 Rummen (BE); Vervoort, Marc, 2460 Lichtaart (BE); van Brussel, Walter, 2170 Merksem (BE)

(56) Entgegenhaltungen:
- EP-A- 1 172 275
- EP-A- 1 598 255
- WO-A-2005/105536
- DE-A1- 10 152 282
- LIANG X ET AL: "Mobile internet access for high-speed trains via heterogeneous networks" PERSONAL, INDOOR AND MOBILE RADIO COMMUNICATIONS, 2003. PIMRC 2003. 14 TH IEEE PROCEEDINGS ON SEPT. 7-10, 2003, PISCATAWAY, NJ, USA,IEEE, Bd. 1, 7. September 2003 (2003-09-07), Seiten 177-181, XP010681580 ISBN: 978-0-7803-7822-3

## Beschreibung

Die Erfindung bezieht trifft ein Verfahren zur drahtlosen Übermittlung von Informationen nach dem Oberbegriff von Patentanspruch 1. Ein solches Verfahren ist aus der EP 1 598 255 A1 bekannt.

Es ist vorgesehen, dass sich in jedem Eisenbahnwagen eines Zuges ein Internetanschluss befindet. Da es zu aufwändig wäre, jeden einzelnen Eisenbahnwagen mit einer Antenne zu versehen, die eine Verbindung zum Internet ermöglicht, müssen Informationen innerhalb eines Zuges von einem Eisenbahnwagen zum anderen gelangen können. Dazu ist eine Kabelverbindung nicht geeignet, da eine solche Kabelverbindung immer neu geschaffen werden müsste, wenn zwei Eisenbahnwagen aneinander gekuppelt werden. Der erforderliche Aufwand wäre zu groß.

Bisher wurde daher zur Übermittlung von Informationen eine drahtlose Verbindung zwischen unmittelbar aneinander gekoppelten Eisenbahnwagen verwendet. Eine solche kettenartige Verbindung der Eisenbahnwagen eines Zuges hat den Nachteil, dass, wenn in einem einzelnen Eisenbahnwagen das Sende-Empfangs-Modul gestört ist, auch die hinter diesem Eisenbahnwagen angekoppelten Eisenbahnwagen keine Verbindung zum Internet haben.

Das bekannte Verfahren, das zum Beispiel WDS (Wireless Distribution System) genannt wird, basiert auf einer bekannten WLAN-Verbindung.

Der Erfindung liegt die Aufgabe zugrunde, ein Verfahren zur drahtlosen Übermittlung von Informationen zwischen Eisenbahnwagen eines Zuges anzugeben, das bei einer Störung in nur einem Eisenbahnwagen die Verbindung in allen anderen Eisenbahnwagen aufrechterhält und insbesondere auch dann eine Verbindung ermöglicht, wenn Eisenbahnwagen eines anderen Zuges angekuppelt sind.

Diese Aufgabe wird bei dem eingangs genannten Verfahren durch die Merkmale des kennzeichnenden Teils von Anspruch 1 gelöst.

Das ist dadurch möglich, dass ein besonderes, weiter als bisher reichendes Übermittlungsverfahren, beispielsweise DWDS, verwendet wird. Dadurch kann vorteilhaft auch der übernächste Eisenbahnwagen erreicht werden.

Es wird der Vorteil erzielt, dass nur in demjenigen Eisenbahnwagen, in dem die Störung aufgetreten ist, der Internetanschluss gestört ist, nicht aber in an diesen Eisenbahnwagen angekuppelten Eisenbahnwagen.

Erfindungsgemäß hat der Zug für Sende-Empfangs-Module eine bestimmte Kennung und ein Sende-Empfangs-Modul tritt mit einem der gleiche Kennung zugeordneten Sende-Empfangs-Modul in Verbindung. Damit wird der Vorteil erzielt, dass Eisenbahnwagen gleicher Kennung in einem Zug in beliebiger Reihenfolge aneinander gekoppelt sein können, ohne dass es zu Problemen mit der Internetverbindung kommen kann. Insbesondere ist es möglich, einen oder mehrere zusätzliche Eisenbahnwagen in einen Zug einzufügen, ohne dass hinsichtlich der Internetverbindung besondere Vorkehrungen getroffen werden müssen. Es reicht aus, dass die neuen Eisenbahnwagen die gleiche Kennung wie die bisherigen Eisenbahnwagen des Zuges haben.

Beispielsweise geht die Kennung von einem Mastermodul aus und ein zusätzliches Mastermodul tritt in Funktion, wenn das erstgenannte Mastermodul ausfällt. Damit wird der Vorteil erzielt, dass das Mastermodul redundant vorhanden ist, so dass eine Störung im Mastermodul nicht zum Ausfallen der gesamten Internetverbindung führen kann.

Die Kennung enthält erfindungsgemäß einen Hinweis auf die maximale Anzahl der Eisenbahnwagen des Zuges und ein Sende-Empfangs-Modul tritt mit einem anderen Sende-Empfangs-Modul nur dann in Verbindung, wenn die maximale Anzahl der Eisenbahnwagen nicht überschritten ist.

Damit wird der Vorteil erzielt, dass Eisenbahnwagen von zwei Zügen, die zufällig in einem Bahnhof nebeneinander stehen, und die gleiche Kennung haben, hinsichtlich der Internetverbindung voneinander getrennt bleiben, weil die Anzahl der Eisenbahnwagen die vorgegebene maximale Anzahl überschreitet. Eine drahtlose Informationsübermittlung von einem Zug zum anderen würde zwar zunächst die Verbindung nicht unterbrechen, könnte aber später, wenn die Züge wieder voneinander entfernt unterwegs sind, in den einzelnen Zügen zu Störungen bei der Übermittlung führen.

Beispielsweise sucht ein Sende-Empfangs-Modul, wenn es innerhalb einer Zeitspanne kein der gleichen Kennung zugeordnetes Sende-Empfangs-Modul findet, ein Sende-Empfangs-Modul mit einer anderen Kennung und tritt mit diesem in Verbindung.

Damit wird der Vorteil erzielt, dass die Internetverbindung auch dann nicht unterbrochen ist, wenn in einen Zug ein Eisenbahnwagen oder sogar ein ganzer Zugteil mit abweichender Kennung eingefügt wird. Das Sende-Empfangs-Modul eines angekoppelten Eisenbahnwagens sucht zunächst über eine vorgegebene Zeitspanne hinweg seine eigene Kennung bei den anderen Eisenbahnwagen. Erst wenn diese Kennung nicht zu finden ist, weil sie nicht Bestandteil des betreffenden Zuges ist, wird, bevor der angekuppelte Eisenbahnwagen ohne Internetverbindung bleibt, eine andere Kennung akzeptiert, die dann die Kennung desjenigen Zuges ist, an den der fremde Eisenbahnwagen angekoppelt wurde.

Es wird der Vorteil erzielt, dass fremde Eisenbahnwagen oder Zugteile im Zug integriert werden können, während gleichzeitig Eisenbahnwagen mit gestörtem Sende-Empfangs-Modul die Kette der Informationsübermittlung (Internetverbindung) durch den Zug nicht unterbrechen können.

Mit dem Verfahren nach der Erfindung wird insbesondere der Vorteil erzielt, dass eine Internetverbindung von jedem Eisenbahnwagen eines Zuges aus mit großer Zuverlässigkeit stets möglich ist.

## Patentansprüche

1. Verfahren zur drahtlosen Übermittlung von Informationen, die insbesondere Teil einer Internetverbindung sind, zwischen Eisenbahnwagen eines Zuges, wobei ein Sende-Empfangs-Modul eines Eisenbahnwagens mit einem Sende-Empfangs-Modul eines anderen Eisenbahnwagens in Verbindung tritt,
wobei ein Sende-Empfangs-Modul mit dem nächstgelegenen funktionierenden Sende-Empfangs-Modul im Zug in Verbindung tritt und
der Zug für Sende-Empfangs-Module eine bestimmte Kennung hat und dass ein Sende-Empfangs-Modul mit einem der gleichen Kennung zugeordneten Sende-Empfangs-Modul in Verbindung tritt,
**dadurch gekennzeichnet,**
**dass** die Kennung einen Hinweis auf die maximale Anzahl der Eisenbahnwagen des Zuges enthält und dass ein Sende-Empfangs-Modul mit einem anderen Sende-Empfangs-Modul nur dann in Verbindung tritt, wenn die maximale Anzahl der Eisenbahnwagen nicht überschritten ist.

2. Verfahren nach Anspruch 1,
**dadurch gekennzeichnet,**
**dass** die Kennung von einem Mastermodul ausgeht und ein zusätzliches Mastermodul in Funktion tritt, wenn das erstgenannte Mastermodul ausfällt.

3. Verfahren nach Anspruch 2,
**dadurch gekennzeichnet,**
**dass** ein Sende-Empfangs-Modul, wenn es innerhalb einer Zeitspanne kein der gleichen Kennung zugeordnetes Sende-Empfangs-Modul findet, ein Sende-Empfangs-Modul mit einer anderen Kennung sucht und mit diesem in Verbindung tritt.

## Claims

1. Method for wireless transmission of information items which, in particular, are part of an Internet link, between railway vehicles in a train, wherein a transmitting/receiving module in a railway vehicle is connected to a transmitting/receiving module in another railway vehicle,
wherein a transmitting/receiving module is connected to the closest functioning transmitting/receiving module in the train, and
the train has a specific identification for transmitting/receiving modules, and that a transmitting/receiving module is connected to a transmitting/receiving module which is associated with the same identification,
**characterized in that**
the identification contains an indication of the maximum number of railway vehicles in a train, and **in that** a transmitting/receiving module is connected to another transmitting/receiving module only when the maximum number of railway vehicles has not been exceeded.

2. Method according to Claim 1,
**characterized in that**
the identification originates from a master module and an additional master module comes into operation if the first-mentioned master module fails.

3. Method according to Claim 2,
**characterized in that,**
when a transmitting/receiving module does not find a transmitting/receiving module associated with the same identification within a time period, it searches for a transmitting/receiving module with a different identification, and makes a connection thereto.

## Revendications

1. Procédé de transmissions sans fil d'informations qui font partie notamment d'une liaison internet entre des voitures de chemin de fer d'un train, un module d'émission-réception d'une voiture de chemin de fer entrant en liaison avec un module d'émission-réception d'une autre voiture de chemin de fer,
dans lequel un module d'émission-réception entre en liaison dans le train avec le module d'émission-réception en fonctionnement le plus proche, et
le train a pour des modules d'émission-réception une caractéristique déterminée et en ce qu'un module d'émission-réception entre en liaison avec un module d'émission-réception affecté de la même caractéristique,
**caractérisé**
**en ce que** la caractéristique comporte une indication sur le nombre maximum des voitures de chemin de fer du train et en ce qu'un module d'émission-réception n'entre en liaison avec un autre module d'émission-réception que si le nombre maximum des voitures de chemin de fer n'est pas dépassé.

2. Procédé suivant la revendication 1,
**caractérisé**
**en ce que** la caractéristique part d'un module maître et un module maître supplémentaire entre en fonction si le module maître mentionné en premier est défaillant.

3. Procédé suivant la revendication 2,
**caractérisé**
**en ce qu'**un module d'émission-réception recherche, lorsqu'il ne trouve pas, dans un laps de temps, de module d'émission-réception affecté de la même caractéristique, un module d'émission-réception ayant une autre caractéristique et entre en liaison avec celui-ci.
